(19) Europäisches Patentamt
European Patent Office
Office européen des brevets

(11) **EP 1 129 893 B1**

(12) **EUROPÄISCHE PATENTSCHRIFT**

(45) Veröffentlichungstag und Bekanntmachung des Hinweises auf die Patenterteilung:
**26.05.2004 Patentblatt 2004/22**

(51) Int Cl.⁷: **B60N 2/58**

(21) Anmeldenummer: **01103138.2**

(22) Anmeldetag: **10.02.2001**

(54) **Verfahren zur kapazitiven Objekterkennung bei Fahrzeugen**

Capacitive object recognition method in vehicles

Procédé de reconnaisance capacitive d'objet pour véhicules

(84) Benannte Vertragsstaaten:
**DE FR GB IT**

(30) Priorität: **03.03.2000 DE 10010531**

(43) Veröffentlichungstag der Anmeldung:
**05.09.2001 Patentblatt 2001/36**

(73) Patentinhaber: **Bayerische Motoren Werke Aktiengesellschaft**
**80809 München (DE)**

(72) Erfinder:
• **Marschner, Christian**
**80803 München (DE)**

• **Eisenmann, Lutz**
**85256 Vierkirchen (DE)**
• **Lu, Yan, Dr.**
**85356 Freising (DE)**
• **Sauer, Sivart**
**80935 München (DE)**

(56) Entgegenhaltungen:

EP-A- 0 993 993          WO-A-97/29391
WO-A-98/22836          WO-A-99/59003
DE-A- 19 547 842          DE-A- 19 612 626
US-A- 3 740 567          US-A- 5 166 679
US-A- 5 525 843

EP 1 129 893 B1

**Beschreibung**

Die Erfindung bezieht sich auf ein Verfahren gemäß der Oberbegriffe der Patentansprüche 1 oder 2.

Derartige Verfahren sind aus verschiedenen Veröffentlichungen, beispielsweise der WO 99/59003 A und der DE 19612626 A bekannt. Im Prinzip sind die beiden i.d.R. plattenförmigen Kondensatoren benachbart zu dem jeweiligen Objekt angeordnet. Zur Belegterkennung für einen Fahrzeugsitz befinden sich die Kondensatoren in der Polsterung des Sitzes und dort beispielsweise im Sitz- und im Lehnenteil. Die Erkennung wird hier dazu verwendet, Sicherheitseinrichtungen wie Airbag und dgl. nur dann auszulösen, wenn der Sitz tatsächlich besetzt ist.

Der WO 9 822 836 wird als der nächstliegender Stand der Technick angesehen.

Bei Anwesenheit einer Person ändert sich die Kapazität der Kondensatoren aufgrund der relativ guten Leitfähigkeit des Menschen. Zur Unterscheidung von Person und Kindersitz müssen die Kapazitätswerte beobachtet und durch einen Algorithmus ausgewertet werden.

Der Erfindung liegt die Aufgabe zugrunde, ein Verfahren der eingangs genannten Art zu schaffen, das mit geringem apparativem Aufwand nicht nur eine genaue Aussage über die Anwesenheit eines Objekts, sondern auch darüber liefert, um welches Objekt es sich handelt.

Die Erfindung löst diese Aufgabe sowohl durch die Merkmale des Patentanspruchs 1 als auch durch die des davon unabhängigen Patentanspruchs 2.

Bei der Erfindung werden die Kapazitäten beider Kondensatoren einzeln bestimmt. Beim ersten Verfahren werden zwei Bewertungen mit Hilfe der Wertetabelle abgeleitet und miteinander verglichen. Stimmen beide Bewertungen in der Art des Objekts überein, wird die Sicherheitseinrichtung bedarfsweise entsprechend gesteuert, d.h. ggf. ausgelöst oder z.B. bei einem Rebound-Kindersitz oder nicht besetztem Sitz, nicht ausgelöst.

Beim zweiten Verfahren werden die beiden Bewertungen miteinander mathematisch in Beziehung gesetzt und aus dem sich aufgrund der mathematischen Beziehung ergebenden Wert wird anhand einer Entscheidungstabelle abgeleitet, ob eine dem Sitz zugeordnete Insassenschutzeinrichtung bedarfsweise aktiviert wird. Die mathematische Beziehung kann vorzugsweise die Bildung des Mittelwerts oder der Summe der beiden Bewertungen sein. Es wird hier nur mit einer Gesamtbewertung gearbeitet.

Vorteilhafte Ausgestaltungen der Erfindung sind Gegenstand der weiteren Patentansprüche. So kann mindestens eine der Kapazitäten aus zwei Teilkapazitäten bestehen, die durch zwei im jeweiligen Sitzteil angeordneten Kondensatoren gebildet werden. Dadurch wird die Analyse weiter verfeinert.

Schließlich kann zusätzlich das Ausgangssignal eines weiteren Sitzbelegungserkennungssensors zumindest dann berücksichtigt werden, wenn die beiden Bewertungen widersprüchliche Aussagen hinsichtlich des Objekts liefern.

Das erfindungsgemäße Verfahren ist anhand der Zeichnung weiter erläutert. Es zeigt

Fig. 1 eine Vorrichtung zur Durchführung der erfindungsgemäßen Verfahren und

Fig. 2 ein Diagramm zur Erläterung der erfindungsgemäßen Verfahren.

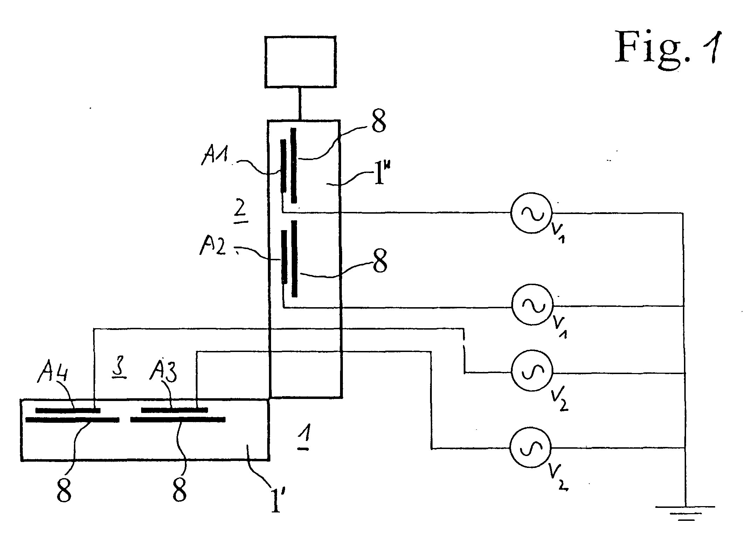

In Figur 1 ist schematisch eine Schaltanordnung in Verbindung mit der konstruktiven Ausgestaltung der Erfindung dargestellt.

In einem schematisch gezeigten Fahrzeugsitz 1 befinden sich Kondensatoren 2 und 3 in einem Sitzflächenteil 1' bzw. einem Lehnenteil 1", die jeweils mit Wechselspannungen $V_1$ und $V_2$ beaufschlagt werden. In der Praxis hat sich ein eine Wechselspannungsfrequenz zwischen 10 und 150 kHz, vorzugsweise von 50 kHz als zweckmäßig erwiesen.

Jeder Kondensator 2 und 3 besteht aus zwei Teilkondensatoren A1 und A2 bzw. A3 und A4. Zusätzlich ist jeder Teilelektrode eine Schirmung in Form einer elektrisch leitenden Platte 8 zugeordnet, durch die eine Richtwirkung hin zum Meß-Objekt erzielt wird (vgl. US 5,166,679 A).

Es werden die Kapazitätswerte ($C\_ext\_i$, i=1,2,3,4) der vier Kondensatoren A1, A2, A3 und A4 bestimmt. Von diesen werden die Werte $C\_leer\_i$ (i=1,2,3,4) des leeren Sitzes abgezogen, die vorab für die verschiedenen Sitztypen ermittelt wurden. Aus diesen vier Differenzwerten werden die resultierenden $C\_obj\_i$ verwendet und damit eine Klassifizierung vorgenommnen.

Alle 500 ms wird ein neuer Satz $C\_obj\_i$ ermittelt. Der statische Algorithmus ermittelt aus diesen 4 Werten ebenfalls alle 500 ms die aktuelle Einschätzung (rating), was sich auf dem Sitz befindet.

Generell deutet eine hohe Kapazität $C\_obj\_i$ auf eine im Sitz befindliche Person hin, eine niedrige oder keine Kapazität ist typisch für einen unbelegten oder mit einem nicht besetzten Kindersitz besetzten Fahrzeugsitz. Bei einer Person mit normaler Sitzhaltung und Bekleidung ergeben sich hohe Kapazitäten (ca. 40 pF) an A2 und A3, und etwas niedrigere (ca. 15p bis 25p) an A1 und A4.

Um verschiedene Bekleidungsvarianten und Sitzhaltungen zu berücksichtigen, geben alle 4 Kondensatoren einen Beitrag zum Rating. Dies geschieht bei den beiden Alternativen zur Bestimmung des Objekts auf zwei verschiedene Arten.

Bei der einen Art wird jeweils die Summe der Kapazitätswerte von Sitzflächen- und Lehnenteil gebildet und daraus für Sitzflächen- und Lehnenteil einzeln ein Rating gebildet. Stimmen beide Ratings in der Art des Objekts überein, d.h. ergibt sich bei beiden Ratings das Objekt als Person oder als besetzter Rebound-Kindersitz auf dem Beifahrersitz, wird im Bedarfsfall die Sicherheitsvorrichtung, z.B. ein Frontairbag, ausgelöst bzw. nicht ausgelöst. Kommen die Ratings zu widersprüchlichen Ergebnissen, wird die Entscheidung, welche Maßnahme ggf. zu ergreifen ist, abhängig vom Zeitverlauf der Ratings gewählt.

Sind z.B. nach der Inbetriebnahme des Fahrzeugs bzw. nach einer Betriebsunterbrechung, bei der die zugehörige Fahrzeugtür geöffnet wurde, zunächst in der Tendenz gleichartige und aufgrund einer vorgegebenen Zeitdauer von z.B. 2 sec. sichere Ratings gegeben, die auf die Anwesenheit einer Person hindeuten, und widersprechen sich die beiden Ratings anschließend (typischerweise bei einer Person auf dem Sitz, die sich nach vorne beugt), wird die ursprüngliche Aussage (Person vorhanden) weiterhin verwendet, auch wenn diese widersprüchliche Aussage eine längere Zeit, z.B. 1 min anhält.

Bei der anderen Art wird aus den einzelnen Kapazitätswerten jeweils gesondert ein Rating gebildet und aus den vier Ratingwerten ein Durchschnittswert gebildet, der mit Hilfe einer Tabelle als Grundlage dafür dient, ob die Sicherheitsvorrichtung im Bedarfsfall ausgelöst wird.

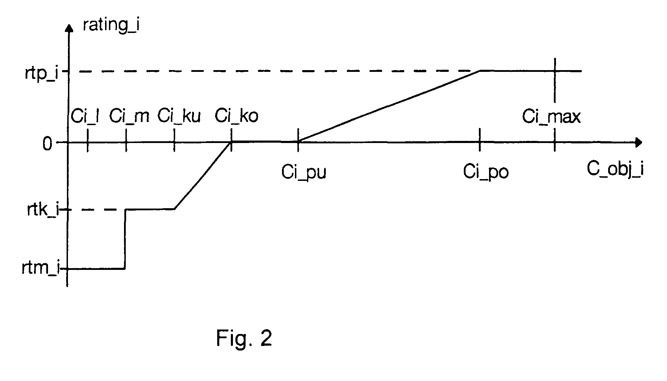

Jedes Rating erfolgt auf der Basis einer Tabelle, deren Werte grafisch in Fig. 2 dargestellt ist. Fig.2 zeigt den prinzipiellen Verlauf der Rating_i aufgrund des Kapazitätswertes C_obj_i des Kondensators i (i=1,2,3,4) bzw. des als Summenwert der Kapazität des Kondensators 2 bzw. 3 vorliegenden Kapazitätswertes.

Dabei bedeutet

> rtp_i: rating_i bei sicher Person
>
> rtk_i: rating_i bei sicher Kindersitz
>
> rtm_i: rating_i bei Person absolut unwahrscheinlich
> Ci_l: Schwelle leerer Sitz: wenn alle C_obj_i <= Ci_l dann leerer Sitz
>
> Ci_m: Mindestkapazität von Person bei ungünstiger Sitzhaltung
>
> Ci_ku: Kindersitz unterer Knick. Ab hier nicht mehr 100% Kindersitz, |rating_i| nimmt ab, während das Rating wertemäßig von einem negativen Wert, z.B. -1 auf den Wert 0 zunimmt.
>
> Ci_ko: Kindersitz oberer Knick. Ab hier nicht mehr Kindersitz, rating_i = 0
>
> Ci_pu: Person unterer Knick. Ab hier Person, rating_i nimmt zu
>
> Ci_po: Person oberer Knick. Ab hier 100% Person
> Ci_max: Maximalkapazität: ein oder mehrere C_obj_i > Ci_max => Fehler

Die Zuordnungstabelle wird durch Messungen der Kapazitätswerte C_obj_i mit vielen verschiedenen Kindersitzen und Personen mit unterschiedlicher Bekleidung auf unterschiedlichen Sitzen ermittelt.

Die Bewertung des Objekts wird aufgrund des Durchschnittwerts der 4 Einzelkondensatorenratings rating_i bestimmt.

> rating = (rating_1+rating_2+rating_3+rating_4)/4.

Sofern

> rating <=0: Rebound-Kindersitz, Sicherheitsvorrichtung ggf. nicht auszulösen
> rating > 0 : Person, Sicherheitsvorrichtung ggf. auszulösen.

Damit ergibt sich eine zuverlässige Aussage über die Art des Objekts und die im Bedarfsfall zu ergreifende Sicherheitsmaßnahme.

**Patentansprüche**

1.    Verfahren zur kapazitiven Objekterkennung bei Fahrzeug-Sitzen, mit einem in einem Lehnenteil und einem in einem Sitzflächenteil angeordneten Kondensator, deren Kapazitäten durch ein Objekt beeinflußt werden,
   **gekennzeichnet durch** folgende Merkmale:

> die Kondensatoren werden mit Wechselspannung beaufschlagt und es wird ihre Kapazität einzeln bestimmt,
> aus dem Wert jeder der beiden Kapazitäten wird anhand einer Wertetabelle eine Bewertung des Objekts abgeleitet,
> bei Übereinstimmung der beiden Bewertungen hinsichtlich der Art des Objekts wird eine dem Sitz zugeordnete Insassenschutzeinrichtung entsprechend aktiviert bzw. deaktiviert.

2.    Verfahren zur kapazitiven Objekterkennung bei Fahrzeug-Sitzen, mit einem in einem Lehnenteil und einem in einem Sitzflächenteil angeordneten Kondensator, deren Kapazitäten durch ein Objekt beeinflußt werden,
   **gekennzeichnet durch** folgende Merkmale:

> die Kondensatoren werden mit Wechselspannung beaufschlagt und es wird ihre Kapazität einzeln bestimmt,
> aus dem jeweiligen Wert der beiden Kapazitäten wird anhand einer Wertetabelle eine Bewertung des Objekts abgeleitet,
> die beiden Bewertungen werden miteinander mathematisch in Beziehung gesetzt,
> aus dem sich aufgrund der mathematischen Beziehung ergebenden Wert wird anhand einer Entscheidungstabelle abgeleitet, ob eine dem Sitz zugeordnete Insassenschutzeinrichtung bedarfsweise aktiviert wird.

3. Verfahren nach Anspruch 2, **dadurch gekennzeichnet, daß** der Mittelwert der beiden Bewertungen gebildet wird.

4. Verfahren nach einem der Ansprüche 1 bis 3, **dadurch gekennzeichnet, daß** mindestens eine der Kapazitäten aus zwei Teilkapazitäten besteht, die durch zwei im jeweiligen Sitzteil angeordneten Kondensatoren gebildet werden.

5. Verfahren nach einem der Ansprüche 1 bis 4, **dadurch gekennzeichnet, daß** zusätzlich das Ausgangssignal eines weiteren Sitzbelegungserkennungssensors zumindest dann berücksichtigt wird, wenn die beiden Bewertungen widersprüchliche Aussagen hinsichtlich des Objekts liefern.

**Claims**

1. A method of capacitive recognition of objects on vehicle seats, with a capacitor mounted on a back rest part and one on the seat-surface part, the capacitances being influenced by an object, **characterised by** the following features:

   the capacitors are supplied with AC voltage and their capacitances are individually determined,

   the object is evaluated by means of each of the values of the two capacitances, using a value table, and

   if the two values coincide regarding the nature of the object, an occupant-protecting device associated with the seat is activated or inactivated as required.

2. A method of capacitive recognition of objects on vehicle seats, with a capacitor mounted on a back rest part and one on the seat-surface part, the capacitances being influenced by an object, **characterised by** the following features:

   the capacitors are supplied with AC voltage and their capacitances are individually determined,

   the object is evaluated from the respective values of the two capacitances, using a value table,

   the two values are mathematically related and the value resulting from the mathematical relation is used, with a decision table, to decide whether an occupant-protecting device associated with the seat is to be actuated as required.

3. A method according to claim 2, **characterised in that** the average of the two values is obtained.

4. A method according to any of claims 1 to 3, **characterised in that** at least one capacitance is made up of two component capacitances formed by two capacitors disposed in the respective seat part.

5. A method according to any of claims 1 to 4, **characterised in that** the output signal of an additional seat occupation-recognising sensor is taken into account, at least when the two evaluations give contradictory information regarding the object.

**Revendications**

1. Procédé destiné à la reconnaissance capacitive d'objets sur des sièges de véhicule, comportant un condensateur disposé dans une partie d'assise et un condensateur disposé dans une partie de dossier, et dont les capacités sont influencées par un objet,
   **caractérisé en ce que**
   les condensateurs sont alimentés par une tension alternative et leur capacité est déterminée individuellement,
   on déduit à l'aide d'une table des valeurs une évaluation de l'objet à partir de la valeur de chacune des deux capacités,
   lorsque les deux évaluations se correspondent pour ce qui est du type de l'objet, on active ou on désactive en conséquence une installation de protection des occupants associée au siège.

2. Procédé destiné à la reconnaissance capacitive d'objets sur des sièges de véhicule, comportant un condensateur disposé dans une partie d'assise et un condensateur disposé dans une partie de dossier et dont les capacités sont influencées par un objet,
   **caractérisé en ce que**
   les condensateurs sont alimentés par une tension alternative et leur capacité est déterminée individuellement,
   on déduit à l'aide d'une table des valeurs une évaluation de l'objet à partir de la valeur respective des deux capacités,
   on met mathématiquement en relation les deux évaluations l'une avec l'autre,
   en se basant sur la valeur obtenue par la relation mathématique, on déduit à l'aide d'une table de décision si on active en cas de besoin une installation de protection des occupants associée au siège.

3. Procédé selon la revendication 2,
   **caractérisé en ce qu'**
   on forme la moyenne des deux évaluations.

**4.** Procédé selon l'une des revendications 1 à 3, **caractérisé en ce qu'** au moins une des capacités se compose de deux capacités partielles qui sont formées par deux condensateurs disposés dans chacune des parties de siège.

**5.** Procédé selon l'une des revendications 1 à 4, **caractérisé en ce qu'** on prend en outre en compte le signal de sortie d'un autre détecteur destiné à reconnaître si le siège est occupé, au moins lorsque les deux évaluations fournissent des prédictions contradictoires concernant l'objet.

Fig. 1

Fig. 2